# EUROPEAN PATENT SPECIFICATION

(11) **EP 2 400 613 B1**
(45) Date of publication and mention of the grant of the patent: **17.04.2013**
(21) Application number: 11164193.2
(22) Date of filing: 28.04.2011
(51) Int. Cl.: H02G 3/12

(54) **Wall finishing template for wall mounting a flush box for electrical applicances and mounting method of said box**
Wandendbearbeitungsschablone zur Wandmontage von Unterputzdosen für elektrischen Installationsgeräte und Montageverfahren dafür
Gabarit de finition mural pour le montage de boîtier d'appareillages électriques à affleurement et méthode de montage associée

(30) Priority: 27.05.2010 IT RM20100281
(43) Date of publication of application: 28.12.2011
(73) Proprietor: BTICINO S.P.A., 20154 Milano (IT)
(72) Inventor: De Ambroggi, Renato, I-21034, Cocquio Trevisago (Varese) (IT)
(74) Representative: Carangelo, Pierluigi

(56) References cited:
- EP-A1- 2 187 492
- EP-A2- 1 542 326
- WO-A2-2008/098263
- DE-U1- 20 107 658
- GB-A- 2 352 470

## Description

The present description refers to the technical field of electrical installations and, more in particular, it concerns a wall finishing template for wall mounting a flush box for electrical appliances.

In civil and industrial electrical installations, it is known to make hidden electrical trunking systems that surface outside at so called power or lighting points, foreseen so as to allow a user to control for example manually one or more devices of the system.

A power point generally comprises a flush box intended to be embedded into a wall, a support frame which can be associated to the flush box, one or more modular electrical appliances, or sockets, which can be fixed to the support frame and a cover plate.

In order to mount flush boxes in walls the following method is commonly used.

In a first step one or more chases in the wall are made, for example in its perforated bricks, foreseen so as to allow conductors to pass through and at least one space communicating with at least one respective chase is also made in the wall. Such a space represents a housing seat inside which a respective box is to be embedded.

In a subsequent step, the aforementioned space is at least partially filled in with cement material, for example with fresh cement mortar. Before the cement material solidifies, a flush box is forcibly arranged in the aforementioned space, exerting pressure onto the cement material with the box. The flush box is arranged in the space so that the edge of the opening of the box, that is to say the access opening of the box, projects beyond the surface of the wall. Through suitable devices, known to a man skilled in the art, before the fresh cement material solidifies the box is aligned level. Generally, before arranging the box in the space, a so called "mortar proof" protective cover is associated to the box. Such a protective closure is used to prevent the aforementioned cement material from penetrating inside the box or from obstructing to some extent the front opening. The protective closure is sized so as to be able to be received inside the box so that it is flush, or substantially flush, with respect to the edge defining the opening of the box. Then possible parts of the space left empty are filled with further fresh cement material and the wall is trimmed, for example with plaster, so that the access opening, or possibly the possible outer edge of the protective closure slightly arranged farther forward with respect to the access opening, is perfectly flush with the wall. Subsequently, the protective closure is removed. This operation, generally carried out with the plaster still in the plastic state, intrinsically leads to the removal or the movement of small plaster potions around the access opening of the flush box, so that the plaster around the box after the removal of the cover is not perfectly even or flush with respect to the wall.

The aforementioned irregularities of the plaster can lead to a problem in wall-alignment both of the support frames, in the case in which they have a portion intended to interfere in abutment against the wall being mounted, and covering plates. The aforementioned alignment problem causes there to be negative consequences on the appearance of end electrical point, since its visible part does not remain perfectly aligned with respect to the wall, as would be desired.

A similar problem occurs when a cladding comprising a binder and an outer tile or batten cladding, like for example tiling, is associated to the wall being mounted. In this case, there is in particular a problem of possible partial obstruction of the opening of the box by the aforementioned binder or by the outer cladding. In particular, the latter can indeed not be shaped perfectly with respect to the access opening of the box or, although being perfectly shaped, is not aligned with such an opening. In these cases, in addition to problems of appearance of the end electrical point there can even be impediments to the mounting of the support frame and/or of the cover plate.

DE 201 07 658 describes a plastering accessory having an abutment portion and a coupling portion, the latter being foreseen for coupling the accessory to a flush box. Such portions do not seem to be in the form of collars. Moreover, the coupling portion forms a step with the abutment portion and for this reason, when plastering/finishing operations are made through the aforementioned accessory it is not possible to ensure for the free surface of the plaster to be perfectly flush with the wall defining the opening of the box on the wall. This creates problems when at a later time extremely thin covering plates, for example plates with a thickness of about 2mm must be fixed to the box, directly or possibly through a support frame.

The purpose of the present description is that of proposing a mounting accessory that is such as to solve or minimise as much as possible the problems described above with reference to the prior art.

Such a purpose is obtained with a wall finishing template for wall mounting a flush box as defined in general in claim 1. Preferred and advantageous embodiments of the aforementioned finishing template are defined in the attached dependent claims.

Also a method for wall mounting a flush box as defined in claim 13 forms the object of the present description.

The invention will become clearer from the following detailed description of a particular embodiment given as an example and, therefore, in no way limiting, in reference to the attached drawings, in which:
- figure 1 is a perspective view of an embodiment of a flush box for electrical appliances;
- figure 2 is a plan view in side section of the flush box of figure 1 in which a protective closure is coupled to the box;
- figure 3 is a first perspective view of a wall finishing template that can be associated to the box of figure 1; and
- figure 4 is a second perspective view of the wall finishing template of figure 3;
- figure 5 is a side plan view of the wall finishing template of figure 3; and
- figure 6 is a plan view in side section of the flush box of figure 1 to which the wall finishing template of figure 3 is coupled.

In the figures, same or similar elements are indicated with the same reference numerals.

With reference to the attached figures, reference numeral 1 wholly indicates a flush box for standard civil electrical appliances, not represented in the figures since they are conventional, such as for example modular appliances intended to control and/or distribute electrical energy of a civil electric installation. The particular example of a flush box 1 represented is, for example, sized to be mounted on the wall with at most two modular electrical appliances, such as, for example, two switches, side by side. It should be understood however that the example described is not limiting and that the rest of the description can also cover boxes with a various modular make-ups.

The flush box 1 comprises a box-shaped body 2 having a front access opening 3, side walls 4 and a back wall 5. The box-shaped body 2 defines a housing space 6. A step 19 is defined inside the flush box 1 between the front access opening 3, which in the example is in the form of a collar projecting with respect to the side walls 4, and the side walls 4.

The box-shaped body 2 is for example obtained through moulding in electrically insulating synthetic-plastic material.

In a *per* se known manner, the flush box 1 is equipped with fixing elements 9 for fixing an electrical appliance-bearing frame, which is not represented in the figures.

In accordance with one embodiment, the side walls 4 of the box-shaped body 2 are for example provided with a plurality of holes 7 suitable for being passed through by containment tubes suitable for housing and protecting electricity conducting cables. In the represented example, the aforementioned holes 7 are obstructed by hole covering plates 8 which can be removed and that are connected to the side walls 4 of the box 1 through tearable bridges 18 or through weakened edges intended to be broken off.

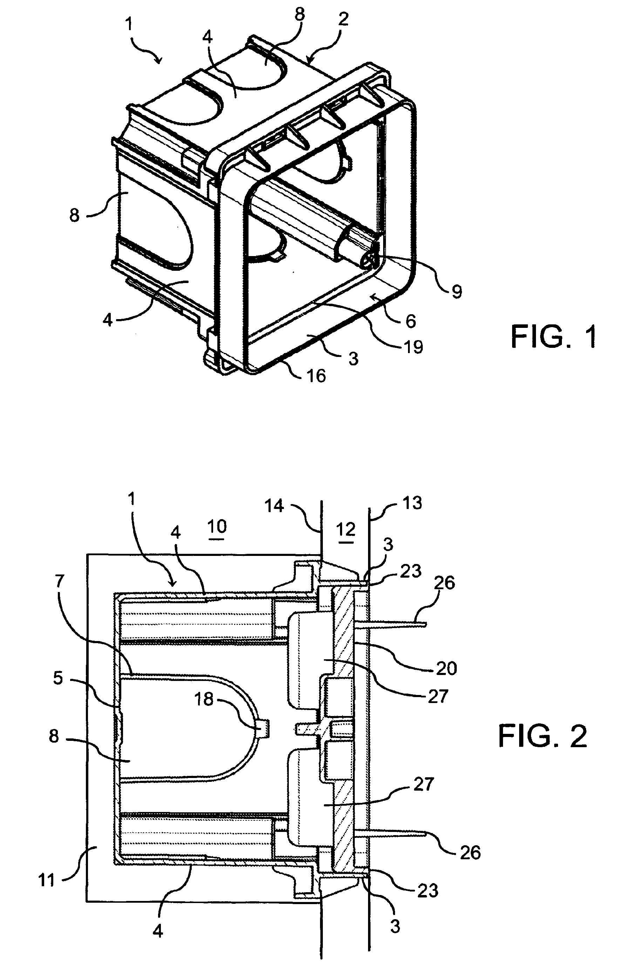

With reference to figure 2, the flush box 1 is intended to be installed embedded in a masonry wall 10 so that the free edge of the access opening 3 is flush with the free surface 13 of one plaster layer 12 applied to the wall 10. In the present description we shall generally refer to a "plaster layer" for the sake of simplicity, with it being understood that, as known by a man skilled in the art, the aforementioned plaster layer is generally made through the juxtaposition of many layers of plaster with different granularity from the coarsest granules in contact with the wall 10 to the finest granules up to the free surface 13.

In order to wall mount the flush box 1, it is necessary to make a space 11 in the wall 10 intended to act as a housing seat for the flush box 1. It is then necessary to partially fill the aforementioned space 11 with cement material in the plastic state, for example cement mortar, forcibly insert the box 1 in the space 11 ensuring that the access opening 3 projects, for example by about 1 or 2 centimetres, from the free surface 14 of the wall 10. The position of the box 1 is accurately adjusted for example through spirit level tools. After alignment, possible portions of the space 11 that have been left free are filled with cement material and a plaster layer 12 is applied to the wall 10 by using the end edge 16 of the access opening 3 to trim the flush plaster layer of such an end edge 16, by practically using such an end edge 16 as a trimming abutment. In order to avoid undesired intrusion of materials inside the flush box 1, it is possible for there to advantageously pre-emptively be, associated to the flush box 1, a protective closure 20, or mortar proof cover 20, intended to be inserted inside of the access opening 3 so as to not project beyond the end edge 16 of the access opening 3 at least in regions facing such an edge 16 or only project slightly. With reference to the last possibility, it should be observed that in the example represented the protective closure 20 is provided with an edge 23 that projects out and that is suitable for being placed over and in abutment with the end edge 16 of the access opening 3, foreseen both so as to obtain a better closure of the box 1 and to define an end-stop abutment position of the protective closure 20 with respect to the flush box 1. It should be clear that in presence of such an edge projecting out 23, the trimming of the plaster layer 12 is made with respect to such an edge 23, but since such an edge is relatively thin (for example, with a thickness of at most 1 or 2 mm), we can say in this case that the trimming of the plaster layer 12 is carried out "substantially" flush with the access opening 3 so that, once the protective closure 20 has been removed, the access opening 3 is substantially flush with the free surface 13 of the plaster layer 12.

With reference to figure 2, the protective closure 20 comprises one or more projecting appendages 26 foreseen both to allow a worker to determine the position in which to install the flush box 1, in the case in which the protective closure 20 is not visible since it is totally covered by the plaster layer 12, and to act as gripping elements for removing the protective closure 20 in the case in which the gripping recesses 27 foreseen in the cover 20 have been obstructed by the plaster material 12.

As already anticipated, after the trimming of the plaster layer 12 the protective closure 20 is removed, preferably when the plaster is still fresh. Such a removal leads to the formation of irregularities, partial removal, flaws in the plaster layer 12 facing the access opening 3.

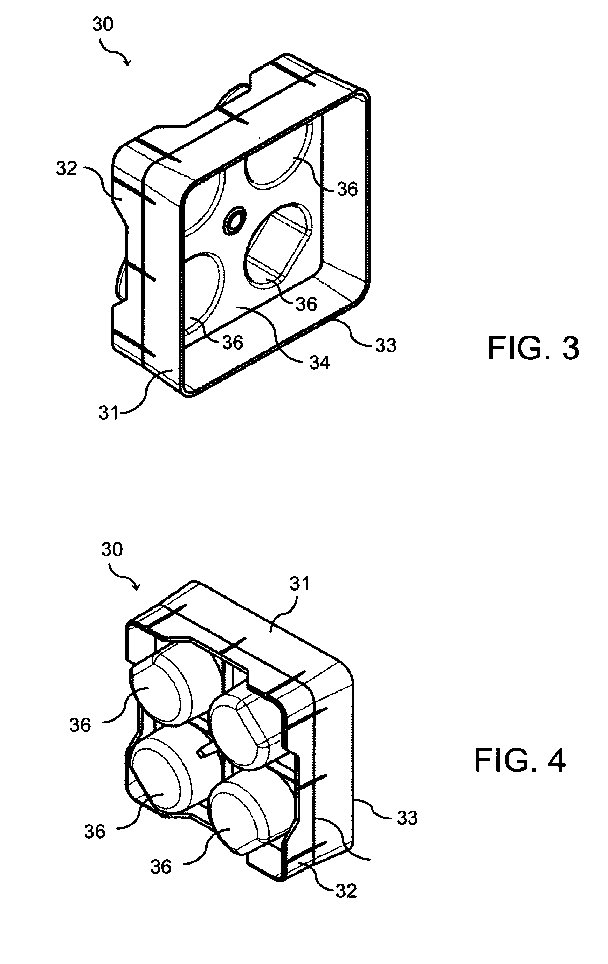

With reference to figure 3, a non-limiting embodiment of a wall finishing template 30 is described for recovering the aforementioned irregularities or flaws. Such a wall finishing template 30 is for example made through moulding in a synthetic plastic material.

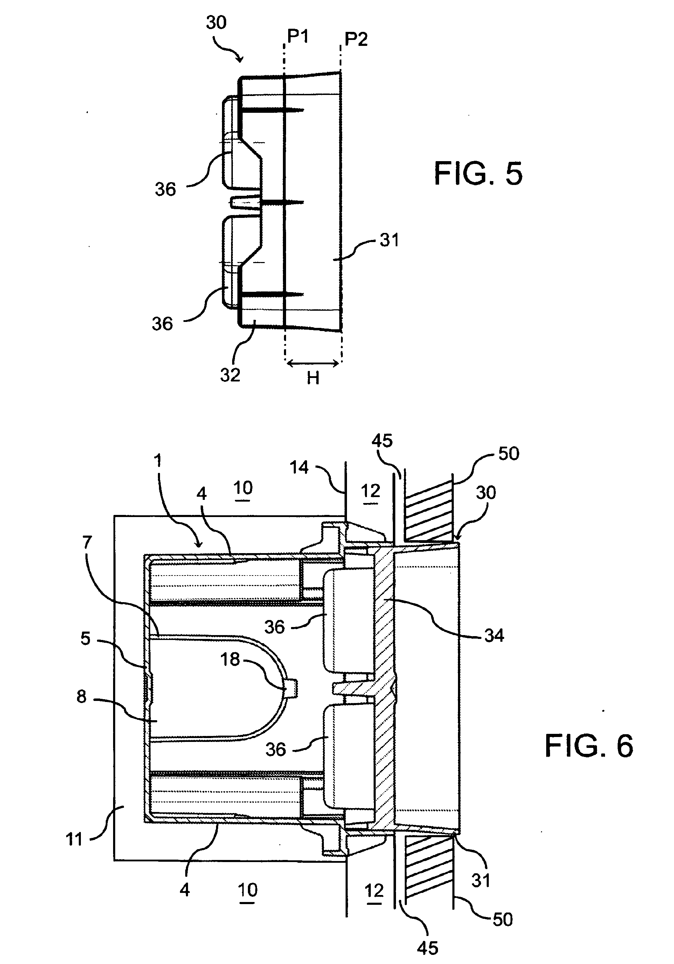

The wall finishing template 30 is suitable for cooperating with the access opening 3 to be coupled to the flush box 1 and comprises an abutment portion in the form of an abutment collar 31 intended to project beyond the access opening 3 and beyond the free surface 13 of the plaster layer 12, in such a manner that an outer surface of the abutment collar 31, transverse to the mounting wall 10, is adapted to serve as abutment element during finishing operations of plaster potions of the wall 10 surrounding the access opening 3 and that are flush with it and face it, so as to again bring such portions flush with the access opening 3 thus eliminating the aforementioned flaws and irregularities. The aforementioned finishing operations are for example carried out through a tool called plastering trowel, using the transverse walls of the abutment collar 31 as an abutment. As clearly visible in figures 3 and 6, in accordance with one embodiment the abutment collar 31 is internally hollow and defines a hollow region of the template 30 open towards the outside of the box 1.

In accordance with one embodiment, the aforementioned abutment collar 31 has a height H such as to be able to project by at least 0.5 centimetres with respect to the access opening 3, in practice with respect to the end edge 16, of the flush box 1. In accordance with a further embodiment, the abutment collar 31 has a height such as to be able to project beyond 1.5 centimetres with respect to the access opening 3 of said box 1, having for example a height H equal to about 2.5 centimetres.

As visible in the example represented in the figures, in accordance with one embodiment, the outer surface of the abutment collar 31 has a frusto-conical profile, being tapered in such a manner so as to widen in the direction away from the access opening 3 of the flush box 1. With reference to figure 5, in accordance with one preferred embodiment, the abutment collar 31 has a minimum outer perimeter (measured in figure 2 level with the section plane P1) equal to (or slightly smaller than) the interior perimeter of the access opening 3 and a maximum outer perimeter (measured in figure 5 level with the section plane P2) equal to the outer perimeter of the access opening 3.

In accordance with one embodiment, the wall finishing template 30 also comprises a coupling portion in the form of a coupling collar 32 joined to the abutment collar 31. The coupling collar 32 is intended to pass through the access opening 3 to cooperate with interior walls of the flush box 1 with the aim of fit-coupling the wall finishing template 30 with the flush box 1 through forced insertion of the coupling collar 32 inside the box through the opening 3. The coupling collar 32 can have a flat or slightly tapered side section. In this last case it is advantageous for such a section to be tapered less than the degree of tapering of the abutment collar 31, in other words even the coupling collar 32 is frusto-conical and tapered.

The aforementioned side section is smoothly joined with respect to the abutment collar 31. In the example represented in the figures, it should be observed that the abutment collar 31 is in particular externally flush with the coupling collar 32, the outside surfaces of said collars forming a continuous flat surface, in other words without steps.

In accordance with one embodiment, the coupling collar 32 is intended, in the coupling position with the box 1, to interfere in abutment with the step 19.

As clearly visible in figures 4 and 6, in accordance with one embodiment the coupling collar 32 is internally hollow and defines a hollow region of the template 30 that is open towards the inside of the box 1.

In accordance with one embodiment, between the coupling collar 32 and the abutment collar 31, the wall finishing template 30 comprises a closing wall 34 suitable for completely obstructing the access opening 3 of the flush box 1. In accordance with a further embodiment, the aforementioned closing wall 34 has one or more ergonomic hand grip recesses 36, preferably at least a pair of said recesses 36, provided in order to facilitate the gripping by hand of the finishing template 30 in its removal operation from the flush box 1. As can clearly be seen in figure 6, in accordance with one embodiment, the aforementioned ergonomic hand grip recesses 36 are defined by walls that from the closing wall 34 project beyond the coupling collar 32, practically towards inside of the box 1.

As already anticipated, in some cases it is desired to apply tiling 50 to the wall. In these cases, once the protective closure 20 has been removed, the finishing template 30 is not necessarily used for trimming the plaster layer 12 but more for acting as an abutment and protection in the application of said tiling 50 to the wall through a suitable binder 45. In an advantageous manner, in this case the wall finishing template 30 applied to the flush box 1 makes it possible to avoid an undesired penetration of the aforementioned binder inside the flush box 1 through the access opening 3 and also makes it possible to have an abutment for the application and possibly also the cutting of the tiles that make up the tiling 50. In such a manner, the access opening 3 of the box 1 is not in the least obstructed either by the aforementioned binder 45 or by the presence of tiles 50 that have not been suitably installed or shaped.

From the description above it is possible to understand how a wall finishing template 30 of the type described above fully achieves the set purposes.

Of course, a man skilled in the art, in order to satisfy contingent and specific requirements, may carry out numerous modifications and variants to the wall finishing template described above all moreover covered by the scope of protection of the invention, as defined by the following claims.

## Claims

1. Wall finishing template (30) for wall mounting a flush box (1) for electrical appliances intended to be permanently embedded in a housing seat (11) obtained in a mounting wall (10), the box (1) comprising a front access opening (3) intended to be arranged flushed, or substantially flushed, with respect to the free surface (13) of a plaster layer (12) of said wall (10), the template (30) being adapted to cooperate with said opening (3) to be coupled to the box and comprising:
- an abutment portion (31) intended to project beyond the opening (3) and said free surface (13), in such a manner that an outer surface of said abutment portion (31), transverse to said wall, is adapted to serve as an abutment element during operations for finishing plaster portions of the wall (10) surrounding the access opening (3) and/or in finishing operations requiring application of tile or batten building claddings to the wall, the outer surface of said abutment portion (31) having a frusto-conical profile, being tapered in a manner such as to widen in the direction away from the access opening (3); and
- a coupling portion (32) joined to the abutment portion (31) and intended to pass through the access opening (3) to cooperate with the interior walls of the flush box (1) with the aim of fit-coupling the template (30) to the box (1) for the forced insertion of the coupling portion (32) into the box through said access opening (3),
said abutment portion being an abutment collar (31) **characterised in that** said coupling portion is a coupling collar (32) smoothly joined to the abutment collar (31).

2. Wall finishing template (30), wherein said abutment collar (31) has a minimum outer perimeter equivalent to the interior perimeter of the access opening (3) and a maximum outer perimeter equivalent to the outer perimeter of the access opening (3).

3. Wall finishing template (30) according to any one of the preceding claims, wherein the abutment collar (31) has a height such as to be able to project by at least 0.5 centimetres with respect to the opening (3) of the flush box (1).

4. Wall finishing template (30) according to claim 3, wherein the abutment collar (31) has a height (H) such as to be able to project beyond 1.5 centimetres with respect to the opening (3) of the flush box (1).

5. Wall finishing template (30) according to any one of the preceding claims, wherein the coupling collar (32) has a tapered side section.

6. Wall finishing template (30) according to claim 5, wherein said tapered side section is tapered less with respect to a degree of tapering of said surface of the abutment collar (31).

7. Wall finishing template (30) according to any one of the preceding claims, wherein said coupling collar (32) is internally hollow and defines a hollow region of the template (30) open towards the inside of the box (1).

8. Finishing template (30) according to any one of the preceding claims, wherein said abutment collar (31) is internally hollow and defines a hollow region of the template (30) open towards the outside of the box (1).

9. Finishing template (30) according to any one of the preceding claims, comprising a closing wall (34) suitable for completely obstructing the access opening (3) of the flush box (1).

10. Finishing template (30) according to claim 9, wherein the aforementioned closing wall (34) comprises one or more ergonomic hand grip recesses (36), foreseen in order to facilitate grasping the finishing template (30) by hand in the operation of removing the latter from the flush box (1).

11. Finishing template (30) according to claim 10, wherein the aforementioned ergonomic hand grip recesses (36) are defined by walls that project from the closing wall (34) beyond the coupling collar (32).

12. Kit of parts comprising a flush box (1) and a wall finishing template (30) according to any one of the preceding claims.

13. Method for wall mounting a flush box (1) for electrical appliances, comprising the steps of:
- creating a space in a wall for obtaining a housing seat (11) for the flush box (1);
- inserting and fixing the box into the housing seat (11) in such a manner that an access opening of said box projects beyond a free surface of said wall;
- applying a plaster layer (12) to said wall trimming the plaster around the access opening (3) in such a manner that upon completing the trimming said opening is flush with a free surface of said plaster layer;
- coupling a wall finishing template (30) according to any one of the preceding claims 1 to 11 to the box (1);
- performing, using as an abutment element said abutment collar, a further finishing operation, aimed at recovering possible flaws of the plaster layer, plaster potions of the wall surrounding the access opening and that are flush with it and/or a finishing operation that requires the application of a building covering to the wall;
the method also comprising:
- a step of coupling a protective closure (20) to the box before performing the step of applying a plaster layer (12); and
- a step of removing the protective closure (20) before performing the step of coupling the wall finishing template (30) to the box (1).

## Patentansprüche

1. Wandfertigstcllungsschablone (30) für eine Wandbefestigung einer Unterputzdose (1) für elektrische Geräte, die permanent in einem Gehäusesitz (11) eingebettet sein soll, der in einer Befestigungswand (10) erhalten wird, wobei die Dose (1) eine vordere Zugriffsöffnung (3) aufweist, die bündig oder im Wesentlichen bündig bezüglich der freien Oberfläche (13) einer Putzschicht (12) der Wand (10) angeordnet sein soll, wobei die Schablone (30) angepasst ist, um mit der Öffnung (3) zusammenzuwirken, um mit der Dose gekoppelt zu werden, und folgende Merkmale aufweist:
einen Anstoßabschnitt (31), der über die Öffnung (3) und die freie Oberfläche (13) hinaus vorstehen soll, auf solch eine Weise, dass eine Außenoberfläche des Anstoßabschnitts (31), quer zu der Wand, angepasst ist, um als ein Anstoßelement zu dienen während Schritten zum Fertigstellen von Putzabschnitten der Wand (10), die die Zugriffsöffnung (3) umgeben, und/oder bei Fertigstellutigsschritten, die die Aufbringung von Fliesen- oder Leistenbauvcrkleidungen auf die Wand erfordern, wobei die Außenoberfläche des Anstoßabsclmitts (31) ein kegelstumpfförmiges Profil aufweist, das sich auf eine Weise verjüngt, um sich in der Richtung weg von der Zugriffsöffnung (3) zu verbreiten; und
einen Kopplungsabschnitt (32), der mit dem Anstoßabschnitt (31) verbunden ist und durch die Zugriffsöffnung (3) verlaufen soll, um mit den Innenwänden der Unterputzdose (1) zusammenzuwirken, mit dem Ziel der Einpasskopplung der Schablone (30) mit der Dose (1) für die Zwangseinfügung des Kopplungsabschnitts (32) in die Dose durch die Zugriffsöffnung (3),
wobei der Anstoßahschnitt eine Anstoßmanschette (31) ist, **dadurch gekennzeichnet, dass** der Kopplungsabschnitt eine Kopplungsmanschette (32) ist, die mit der Anstoßmanschette (31) glatt verbunden ist.

2. Wandfertigstellungsschablone (30), bei der die Anstoßmanschettc (31) einen minimalen Außenumfang, der gleich dem Innenumfang der Zugriffsöffnung (3) ist, und einen maximalen Außenumfang aufweist, der äquivalent zu dem Außenumfang der Zugriffsöffnung (3) ist.

3. Wandfertigstellungsschablone (30) gemäß einem der vorhergehenden Ansprüche, bei der die Anstoßmanschette (31) eine Höhe aufweist, um in der Lage zu sein, bezüglich der Öffnung (3) der Unterputzdose (1) um zumindest 0,5 cm vorzustehen.

4. WandfertigsteHungsschabtone (30) gemäß Anspruch 3, bei der die Anstoßmanschette (31) eine Höhe (H) aufweist, um in der Lage zu sein, bezüglich der Öffnung (3) der Unterputzdose (1) über 1,5 cm hinaus vorzustehen.

5. Wandfertigstellungsschablone (30) gemäß einem der vorhergehenden Ansprüche, bei der die Kopplungsmanschette (32) einen sich verjüngenden Seitenabschnitt aufweist.

6. Wandfertigsiellungsschablone (30) gemäß Anspruch 5, bei der der sich verjüngende Seitenabschnitt weniger verjüngt ist bezüglich eines Verjüngungsgrads der Oberfläche der Anstoßmanschette (31).

7. Wandfertigstellungsschablone (30) gemäß einem der vorhergehenden Ansprüche, bei der die Kopplungsmanscheite (32) innen hohl ist und eine hohle Region der Schablone (30) definiert, die zum Inneren der Dose (1) hin offen ist.

8. Fertigstellungsschablone (30) gemäß einem der vorhergehenden Ansprüche, bei der die Anstoßmanschette (31) innen hohl ist und eine hohle Region der Schablone (30) definiert, die zur Außenseite der Dose (1) hin offen ist.

9. Fertigstellungsschablone (30) gemäß einem der vorhergehenden Ansprüche, die eine Abschlusswand (34) aufweist, die geeignet, ist, um die Zugriffsöffnung (3) der Unterputzdose (1) vollständig zu versperren.

10. Fertigstellungsschablone (30) gemäß Anspruch 9, bei der die oben erwähnte Abschlusswand (34) eine oder mehrere ergonomische Handgriffausnehmungen (36) aufweist, die dazu vorgesehen sind, ein Greifen der Fertigstellungsschablone (30) von Hand während des Schritts des Entfernens der Letzteren von der Unterputzdose (1) zu ermöglichen.

11. Fertigstellungsschablone (30) gemäß Anspruch 10, bei der die oben erwähnten ergonomischen Handgriffäusnehmungen (36) durch Wände definiert sind, die von der Abschlusswand (4) über die Kopplungsmanschette (33) hinaus vorstehen.

12. Teilesatz, der eine Unterputzdose (1) und eine Wandfertigstellungsschablone (30) gemäß einem der vorhergehenden Ansprüche aufweist.

13. Verfahren zur Wandbefestigung einer Unterputzdose (1) für elektrische Geräte, das folgende Schritte aufweist:
Erzeugen eines Raums in einer Wand zum Erhalten eines Gehäusesitzes (11) für die Unterputzdose (1);
Einfügen und Befestigen der Dose in dem Gehäusesitz (11) auf solch eine Weise, dass eine Zugriffsöffnung der Dose über eine freie Oberfläche der Wand hervorsteht;
Aufbringen einer Putzschicht (12) auf die Wand, die den Putz um die Zugriffsöffnungen (3) auf solch eine Weise begradigt, dass auf das Abschließen des Begradigens hin die Öffnung bündig ist mit einer freien Oberfläche der Putzschicht;
Koppeln einer Wandfeitigstellungssehablone (30) gemäß einem der vorhergehenden Ansprüche 1 bis 11 mit der Dose (1);
Durchführen, unter Verwendung der Anstoßmanschette als Anstoßelement, eines weiteren Fertigstellungsschritts, der dazu gedacht ist, mögliche Fehler der Putzschicht, von Putzabschnitten der Wand, die die Zugriffsöffnung umgeben und die bündig mit derselben sind, zu beheben und/oder eines Fertigstellungsschritts, der die Aufbringung einer Bauabdeckung auf die Wand erfordert;
wobei das Verfahren auch folgende Schritte aufweist:
einen Schritt des Koppelns einer Schutzumhüllung (20) mit der Dose, bevor der Schritt des Aufbringens einer Putzschicht (12) durchgeführt wird; und
einen Schritt des Entfernens der Schutzumhüllung (20), bevor der Schritt des Koppelns der Wandfertigstellungsschablone (30) mit der Dose (1) durchgeführt wird.

## Revendications

1. Gabarit de finition mural (30) pour l'installation murale d'un boîtier encastrable (1) pour appareils électriques prévu pour être encastré de manière permanente dans un siège de logement (11) obtenu dans une paroi d'installation (10), le boîtier (1) comprenant une ouverture d'accès avant (3) prévue pour être agencée à affleurement, ou sensiblement à affleurement, par rapport à la surface libre (13) d'une couche de plâtre (12) de ladite paroi (10), le gabarit (30) étant adapté pour coopérer avec ladite ouverture (3) à coupler au boîtier, et comprenant :
- une partie de butée (31) prévue pour faire saillie au-delà de l'ouverture (3) et de ladite surface libre (13), de sorte qu'une surface externe de ladite partie de butée (31), transversale par rapport à ladite paroi, est adaptée pour servir d'élément de butée pendant les opérations de finition des parties en plâtre de la paroi (10) entourant l'ouverture d'accès (3) et/ou dans les opérations de finition nécessitant l'application de revêtements de carreaux ou liteau sur la paroi, la surface externe de ladite partie de butée (31) ayant un profil tronconique qui est progressivement rétréci afin de s'élargir dans la direction à distance de l'ouverture d'accès (3) ; et
- une partie de couplage (32) assemblée à la partie de butée (31) et prévue pour traverser l'ouverture d'accès (3) afin de coopérer avec les parois intérieures du boîtier encastrable (1) avec le but de coupler par ajustement le gabarit (30) au boîtier (1) pour l'insertion forcée de la partie de couplage (32) dans le boîtier par ladite ouverture d'accès (3),
ladite partie de butée étant un collier de butée (31),
**caractérisé en ce que** ladite partie de couplage est un collier de couplage (32) assemblé sans à-coup au collier de butée (31).

2. Gabarit de finition mural (30), dans lequel ledit collier de butée (31) a un périmètre externe minimum équivalent au périmètre intérieur de l'ouverture d'accès (3) et un périmètre externe maximum équivalent au périmètre externe de l'ouverture d'accès (3).

3. Gabarit de finition mural (30) selon l'une quelconque des revendications précédentes, dans lequel le collier de butée (31) a une hauteur telle qu'il peut faire saillie sur au moins 0,5 centimètres par rapport à l'ouverture (3) du boîtier encastrable (1).

4. Gabarit de finition mural (30) selon la revendication 3, dans lequel le collier de butée (31) a une hauteur (H) telle qu'il peut faire saillie au-delà de 1,5 centimètres par rapport à l'ouverture (3) du boîtier encastrable (1).

5. Gabarit de finition mural (30) selon l'une quelconque des revendications précédentes, dans lequel le collier de couplage (32) a une section latérale progressivement rétrécie.

6. Gabarit de finition mural (30) selon la revendication 5, dans lequel ladite section latérale progressivement rétrécie est moins progressivement rétrécie par rapport à un degré de conicité de ladite surface du collier de butée (31).

7. Gabarit de finition mural (30) selon l'une quelconque des revendications précédentes, dans lequel ledit collier de couplage (32) est intérieurement creux et définit une région creuse du gabarit (30) ouverte vers l'intérieur du boîtier (1).

8. Gabarit de finition (30) selon l'une quelconque des revendications précédentes, dans lequel ledit collier de butée (31) est intérieurement creux et définit une région creuse du gabarit (30) ouverte vers l'extérieur du boîtier (1).

9. Gabarit de finition (30) selon l'une quelconque des revendications précédentes, comprenant une paroi de fermeture (34) appropriée pour obstruer complètement l'ouverture d'accès (3) du boîtier encastrable (1).

10. Gabarit de finition (30) selon la revendication 9, dans lequel la paroi de fermeture (34) mentionnée précédemment comprend un ou plusieurs évidements de poignée ergonomiques (36), prévus afin de faciliter la prise du gabarit de finition (30) à la main lors du retrait de ce dernier du boîtier encastrable (1).

11. Gabarit de finition (30) selon la revendication 10, dans lequel les évidements de poignée ergonomiques (36) mentionnés ci-dessus sont définis par des parois qui font saillie de la paroi de fermeture (34) au-delà du collier de couplage (32).

12. Kit de pièces comprenant un boîtier encastrable (1) et un gabarit de finition mural (30) selon l'une quelconque des revendications précédentes.

13. Procédé pour l'installation murale d'un boîtier encastrable (1) pour appareils électriques, comprenant les étapes consistant à :
- créer un espace dans une paroi pour obtenir un siège de logement (11) pour le boîtier encastrable (1) ;
- insérer et fixer le boîtier dans le siège de logement (11) de sorte qu'une ouverture d'accès dudit boîtier fait saillie au-delà de la surface libre de ladite paroi ;
- appliquer une couche de plâtre (12) sur ladite paroi en découpant le plâtre autour de l'ouverture d'accès (3) de sorte que suite à l'achèvement de la découpe, ladite ouverture est à affleurement avec une surface libre de ladite couche de plâtre ;
- coupler un gabarit de finition mural (30) selon l'une quelconque des revendications 1 à 11, au boîtier (1) ;
- réaliser, en utilisant ledit collier de butée en tant qu'élément de butée, une autre opération de finition, ayant pour but de récupérer les défauts éventuels de la couche de plâtre, les parties de plâtre de la paroi entourant l'ouverture d'accès et qui sont à affleurement avec cette dernière et/ou une opération de finition qui nécessite l'application d'un revêtement de construction sur la paroi ;
le procédé comprenant également :
- une étape consistant à coupler une fermeture de protection (20) au boîtier avant de réaliser l'étape consistant à appliquer une couche de plâtre (12) ; et
- une étape consistant à retirer la fermeture de protection (20) avant de réaliser l'étape consistant à coupler le gabarit de finition mural (30) au boîtier (1).
